# EUROPEAN PATENT APPLICATION

(11) **EP 4 796 263 A1**
(43) Date of publication of application: **26.08.2026**
(21) Application number: 23955854.7
(22) Date of filing: 31.10.2023
(51) Int. Cl.: B25J 9/00

(54) **WAIST SUPPORT DEVICE HAVING CYLINDRICAL DIFFERENTIAL MECHANISM**

(30) Priority: 17.10.2023 CN 202311343150
(71) Applicant: SHENZHEN KENQING TECHNOLOGY CO., LTD., Shenzhen, Guangdong 518000 (CN)
(72) Inventor: YU, Yunbo, Shenzhen, Guangdong 518000 (CN); XIA, Liuyang, Shenzhen, Guangdong 518000 (CN)
(74) Representative: Petraz, Gilberto Luigi
(86) International application number: PCT/CN2023/128451
(87) International publication number: WO 2025/081536

(57) **Abstract**

The present application discloses a waist support device with a cylindrical differential mechanism, including a cylindrical differential mechanism, a waist-back module, and a leg module. The cylindrical differential mechanism includes an A output end, a B output end, and a power module, and the power module includes a main output end and a power output end, the main output end being rotatable relative to or lockable with the power output end; the A output end includes an A output disc and an A pulling strap, and the B output end includes a B output disc and a B pulling strap, the A pulling strap and the B pulling strap being wound around the A output disc and the B output disc respectively in opposite directions, one end of the A pulling strap and one end of the B pulling strap being fixed to the A output disc and the B output disc respectively, and the other ends being fixedly connected to the leg module; the A output disc and the B output disc are drivingly connected to the power output end and the main output end respectively, and the A output disc and the B output disc are rotatable relative to or lockable with each other; and the cylindrical differential mechanism is rotatably connected to the lower end of the waist-back module via the differential fixing shaft. The present application offers advantages such as light weight, small storage volume, low cost, and compact and body-conforming design.

## Description

The present application is based on and claims the priority of the Chinese patent application No. 202311343150.8, filed on October 17, 2023, the entire contents of which are hereby incorporated into the present application by reference.

### Technical Field

The present application relates to the field of wearable exoskeleton devices, and more particularly to a waist support device with a cylindrical differential mechanism.

### Background

People often encounter situations in daily work and life where they need support for their waists when bending over, to reduce the load on waist muscles and mitigate injuries to the waist muscles and spine. Wearable waist exoskeleton devices meet this kind of requirements and can assist users in lifting heavier loads while reducing waist muscle burden. The prior art discloses waist assistive exoskeleton devices with a power module arranged at the hip joint, and also discloses implementation mechanisms of such devices.

Conventional waist assistive exoskeleton devices arranged at the hip joint feature power modules distributed on the left side and right side of the human hip joint, with a rigid waist bar arranged in the waist region to connect power modules on the left side and right side. Such devices adopt a dual-power design, and the rigid waist bar needs to transmit a relatively high torque. Therefore, its length needs to be adjustable to accommodate users of different body sizes. This will increase the complexity of the waist bar and will lead to a high manufacturing cost, making further weight reduction difficult. Moreover, because the power modules on the left side and right side are positioned around the two sides of the user's waist, such devices tend to have large volumes and poor portability.

Therefore, how to further reduce the volume, weight, and manufacturing cost of waist assistive devices while maintaining effective waist assistive functionality is a technical problem urgently needing resolution by persons skilled in the art.

### Summary

The objective of the present application is to overcome the drawbacks of the prior art by providing a waist support device with a cylindrical differential mechanism, thereby solving problems of the conventional waist support devices-namely, large volume, heavy weight, high cost, and lack of compactness.

To achieve the above objective, an embodiment of the present application provides a waist support device with a cylindrical differential mechanism, including a cylindrical differential mechanism, a waist-back module, and a leg module.

The cylindrical differential mechanism is horizontally arranged near the posterior waist of the human body. The main body portion of the cylindrical differential mechanism has a cylindrical structure, and the central axis of the cylindrical differential mechanism is horizontally arranged and parallel to the coronal plane of the human body. Two ends of the cylindrical differential mechanism are provided with an A output end and a B output end, there is a power module between the A output end and the B output end, and the power module includes a main output end and a power output end. The main output end can rotate or lock relative to the power output end under driving.

The A output end comprises an A output disc and an A pulling strap; and the B output end comprises a B output disc and a B pulling strap. The A pulling strap and the B pulling strap are wound onto the A output disc and the B output disc, respectively, in opposite directions. One end of the A pulling strap is fixed to the A output disc, and one end of the B pulling strap is fixed to the B output disc. The A output disc and the B output disc are drivingly connected to the power output end and the main output end, respectively, enabling the A output disc and the B output disc to rotate relatively or to be locked under driving action.

The lower end of the waist-back module is provided with a differential fixing shaft, and the central axis of the differential fixing shaft coincides with the central axis of the cylindrical differential mechanism; and the cylindrical differential mechanism is rotationally connected to the lower end of the waist-back module via the differential fixing shaft.

The other ends of the A pulling strap and the B pulling strap are respectively fixedly connected to the leg modules of the two legs of the human body.

The waist support device provided by the embodiments of the present application has the following advantages. 1. Light weight-the device weighs less than half that of conventional waist assistive devices distributed across the waist and bilateral hip joints of the human body; 2. small storage volume-the device eliminates the hip power module and the rigid annular waist rod connecting the left side and right side, thereby significantly reducing the storage volume; 3. low cost-only one power module is required for normal operation; and 4. compact and body-conforming-the power module is positioned near the posterior waist of the human body, with a small power diameter, and no protruding rigid structures existing on the anterior side, left side and right side, and legs of the human body, thereby not interfering with squatting, running, jumping of the human body, or flexible movements during work, and thereby resulting in an improved overall user experience.

### Brief Description of the Drawings

In order to more clearly explain the technical scheme of the embodiments of the present application, the following will briefly introduce the drawings that need to be used in the description of the embodiments. It is obvious that the drawings described below are some embodiments of the present application. For those of ordinary skills in the art, other drawings can also be obtained according to the accompanying drawings without creative efforts.
Fig. 1 is a schematic front view of embodiment 1 of a waist support device with a cylindrical differential mechanism according to the present application;
Fig. 2 is a schematic view of a cylindrical differential mechanism in embodiment 1 of a waist support device with a cylindrical differential mechanism according to the present application;
Fig. 3 is a schematic view of embodiment 1 of a waist support device with a cylindrical differential mechanism according to the present application during walking;
Fig. 4 is a schematic view of embodiment 1 of a waist support device with a cylindrical differential mechanism according to the present application during bending at the waist;
Fig. 5 is a schematic cross-sectional view of a power module in embodiment 1 of a waist support device with a cylindrical differential mechanism according to the present application;
Fig. 6 is a schematic view of a cylindrical differential mechanism in embodiment 2 of a waist support device with a cylindrical differential mechanism according to the present application; and
Fig. 7 is a schematic side view of embodiment 3 of a waist support device with a cylindrical differential mechanism according to the present application during walking.

Reference numerals of the drawings are as follows:
1, cylindrical differential mechanism; 11, A output end; 111, A output disc; 112, A pulling strap; 12, B output end; 121, B output disc; 122, B pulling strap; 13, power module; 131, motor module; 1311, stator; 1311A, stator shaft; 1311B, stator shaft hole; 1312, rotor; 1312A, rotor shaft; 132, deceleration mechanism; 1321, reducer housing; 1322, reducer input end; 1323, reducer output end; 133, main output end; 134, power output end; 14, elastic module; and 15, central axis;
2, waist-back module; 21, back frame; 211, frame lower end; 212, differential fixing shaft; 212A, fixing shaft hole; 213, frame upper end; 214, frame waist belt anchoring point; 22, waist belt; 221, buttock pad; 222, sliding pad block; 223, waist pad block; and 23, shoulder strap;
3, leg module; 31, leg strap; 311, pulling strap anchoring point; and 32, foot strap;
4, sensing and control system; 41, drive module; 411, drive module fixing block; 42, motor encoder; 421, coded magnetic steel; 422, coded induction circuit; and 43, inclinometer; and
5, battery module; and 51, power cable.

### Detailed Description of the Embodiments

The technical solutions in the embodiments will be clearly and completely described below in conjunction with the accompanying drawings of the present application. Similar assembly designations in the drawings represent similar assemblies. Clearly, the embodiments described below constitute only a portion-not all-of the embodiments of the present application. Based on the embodiments of the present application, all other embodiments obtained by one of ordinary skill in the art without involving any inventive efforts are within the scope of the present application.

It should be understood that when used in this specification and the appended claims, the terms "including" and "containing" indicate the presence of the described features, entirety, steps, operations, elements, and/or assemblies, but do not exclude the presence or addition of one or more other features, entirety, steps, operations, elements, assemblies, and/or sets of them.

It should also be understood that the terms used in the description of the embodiments herein are for the purpose of describing particular embodiments only and are not intended to limit the scope of the embodiments herein. As used in the description of the embodiments herein and the appended claims, the singular forms "a", "one", and "the" are intended to include the plural forms as well, unless the context clearly indicates otherwise.

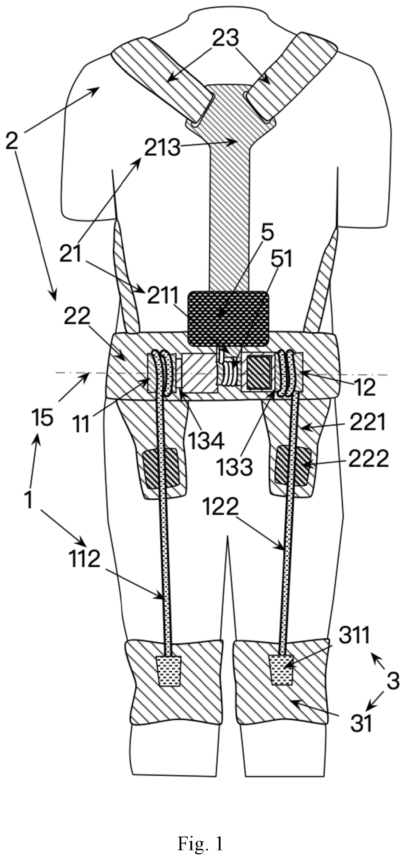

Referring to Fig. 1, Fig. 1 is a schematic front view of embodiment 1 of a waist support device with a cylindrical differential mechanism. The waist support device includes a cylindrical differential mechanism 1, a waist-back module 2, and a leg module 3.

The cylindrical differential mechanism 1 is horizontally arranged near the posterior waist region of the human body. The main body portion of the cylindrical differential mechanism 1 has a cylindrical structure, and the central axis 15 of the cylindrical differential mechanism 1 is horizontally arranged and parallel to the coronal plane of the human body. Two ends of the cylindrical differential mechanism 1 are provided with an A output end 11 and a B output end 12, respectively.

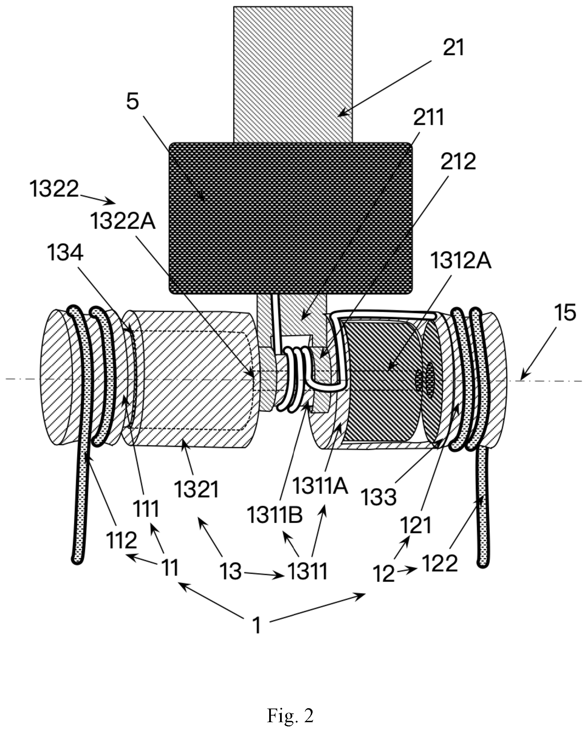

With reference to Fig. 2, a power module 13 is provided between the A output end 11 and the B output end 12. The power module 13 is also cylindrical and includes a main output end 133 and a power output end 134. The main output end 133 is rotatable relative to, or lockable with, the power output end 134 under drive.

The A output end 11 comprises an A output disc 111 and an A pulling strap 112; and the B output end 12 comprises a B output disc 121 and a B pulling strap 122. The A pulling strap 112 and the B pulling strap 122 are wound onto the A output disc 111 and the B output disc 121, respectively, in opposite directions. One end (i.e., the head end) of the A pulling strap 112 and one end (i.e., the head end) of the B pulling strap 122 are fixed to the A output disc 111 and the B output disc 121, respectively. The A output disc 111 and the B output disc 121 are drivingly coupled to the power output end 134 and the main output end 133, respectively, such that the A output disc 111 and the B output disc 121 are rotatable relative to each other or lockable under drive. The other end (i.e., the lower end) of the A pulling strap 112 and the other end (i.e., the lower end) of the B pulling strap 122 are fixedly connected to the leg modules 3 of the user's two legs. When the main output end 133 and the power output end 134 rotate relative to each other, the A output disc 111 and the B output disc 121 rotate relative to each other, causing the A pulling strap 112 and the B pulling strap 122 wound on them to simultaneously undergo winding-in shortening or winding-out elongating, thereby achieving the same directional motion between the A pulling strap 112 and the B pulling strap 122. When the main output end 133 and the power output end 134 are locked relative to each other under drive, the A output disc 111 and the B output disc 121 are locked relative to each other, resulting in a rigid coupling between the A output disc 111 and the B output disc. The A pulling strap 112 and the B pulling strap 122 cannot simultaneously undergo winding-in shortening or winding-out elongating; instead, while one undergoes winding-in shortening, the other undergoes winding-out elongating, thereby achieving differential motion between the A pulling strap 112 and the B pulling strap 122.

The leg module 3 comprises a leg strap 31. The leg strap 31 is secured to the thigh, calf, foot, or knee joint of the human body. The leg strap 31 is provided with a pulling strap anchoring point 311. The lower ends of the A pulling strap 112 and the B pulling strap 122 are fixedly connected to two pulling strap anchoring points 311 respectively. When the A pulling strap 112 or the B pulling strap 122 is wound upward, it undergoes tensioning; and when it is wound downward, it undergoes slackening.

With reference to Fig. 2, the lower end of the waist-back module 2 is provided with a differential fixing shaft 212, and the central axis of the differential fixing shaft 212 coincides with the central axis 15 of the cylindrical differential mechanism 1; and the cylindrical differential mechanism 1 is rotationally connected to the lower end of the waist-back module 2 via the differential fixing shaft 212. The cylindrical differential mechanism 1 is provided at the lower end of the waist-back module 2, and the lower end of the waist-back module 2 is provided with a differential fixing shaft 212, so that the A output disc 111 and the B output disc 121 can rotate relative to each other and relative to the lower end of the waist-back module 2.

Specifically, the waist-back module 2 comprises a back frame 21, a waist belt 22, and a shoulder strap 23. The back frame 21 is arranged on the back of the human body and is made of a rigid material or a material having a certain elasticity. A frame lower end 211 of the back frame 21 extends to the vicinity of the user's posterior waist and is secured to the waist via the waist belt 22. To enhance wearing comfort, a waist pad block 223 is provided between the waist belt 22 and the frame lower end 211 of the back frame 21. A frame upper end 213 of the back frame 21 extends to the vicinity of the user's posterior heart and is secured to the shoulder and back of the human body via the shoulder strap 23. The cylindrical differential mechanism 1 is provided on the frame lower end 211 of the back frame 21 such that the cylindrical differential mechanism 1 is rotatably coupled to the back frame 21 via the differential fixing shaft 212. That is, the A output disc 111 and the B output disc can rotate relative to the back frame 21.

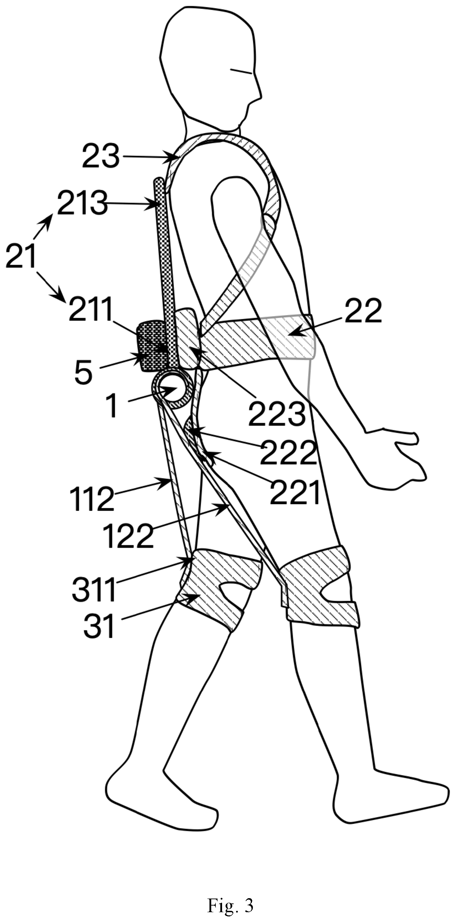

With reference to Fig. 3, the waist belt 22 is provided with a buttock pad 221, and a sliding pad block 222 is mounted on the buttock pad 221; and the A pulling strap 112 and the B pulling strap 122 slide on the sliding pad block 222. The sliding pad block 222 may be made of a lubricating material or equipped with rollers to reduce the friction during the upward and downward sliding of the A pulling strap 112 and the B pulling strap 122.

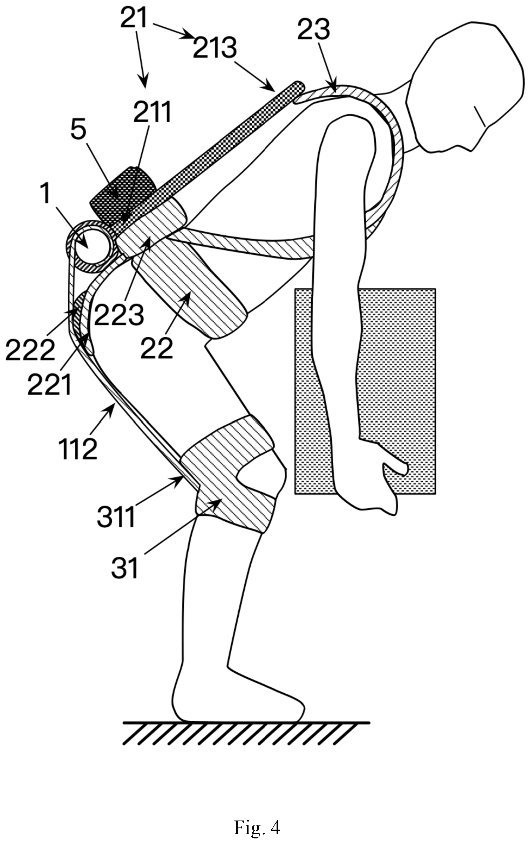

The operating principle of embodiment 1 of the waist support device is as follows: when the power module 13 is in the locked state, the main output end 133 and the power output end 134 are relatively fixed, rendering the entire cylindrical differential mechanism 1 rigid. When the cylindrical differential mechanism 1 rotates as a whole relative to the back frame 21, the A output disc 111 and the B output disc rotate in the same direction; and due to the opposite winding directions of the A pulling strap 112 and the B pulling strap 122, the A pulling strap 112 and the B pulling strap 122 perform differential motion-as shown in Fig. 3-to meet the requirement of alternating swing of two legs during human walking. When the power module 13 is in the unlocked state, the main output end 133 and the power output end 134 rotate relative to each other under the drive of the power module 13, causing the A output disc 111 and the B output disc 121 to rotate relative to each other; and due to the opposite winding directions of the A pulling strap 112 and the B pulling strap 122, the A pulling strap 112 and the B pulling strap 122 perform the same direction motion-as shown in Fig. 4-to meet the requirement of flexion and extension of both legs in the same direction during bending at the waist and standing up of the human body. Moreover, if the A pulling strap 112 and the B pulling strap 122 are simultaneously wound upward and tensioned, they apply a downward tensile force to the cylindrical differential mechanism 1. The cylindrical differential mechanism 1 is mounted at the frame upper end 213 of the back frame 21 and is secured to the human body via the waist belt 22. The cylindrical differential mechanism 1 forms a fulcrum with the human waist via the waist pad block 223. Under the tensile force of the A pulling strap 112 and the B pulling strap 122, the frame upper end 213 of the back frame 21 tilts upward, thereby tightening the shoulder strap 23 and lifting the user's shoulder to assist waist extension and reduce the waist muscle load of the human body. Concurrently, the A pulling strap 112 and the B pulling strap 122 compress the buttock sliding pad block 222, thereby applying pressure to the user's buttock to assist waist extension and reduce waist muscle load of the human body.

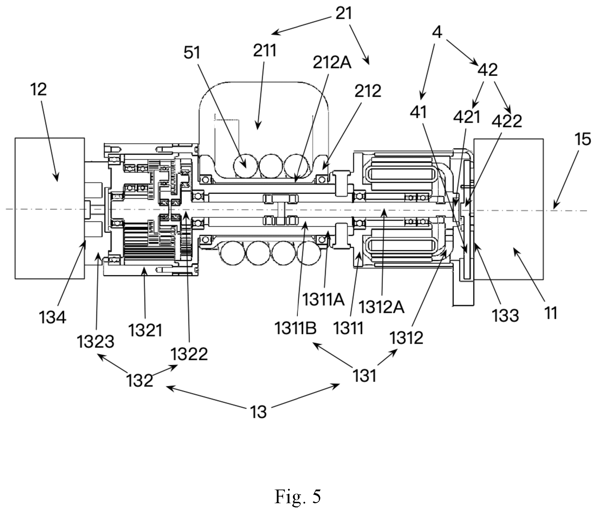

In conjunction with Fig. 5, the power module 13 comprises a motor module 131 and a deceleration mechanism 132, both having a cylindrical structure; the motor module 131 comprises a stator 1311 and a rotor 1312, and the deceleration mechanism 132 comprises a reducer housing 1321, a reducer input end 1322, and a reducer output end 1323; the reducer input end 1322 is adjacent to the stator 1311, and the reducer output end 1323 is disposed on a side away from the motor module 131 and is in driving connection with the power output end 134; the rotor 1312 includes a rotor shaft 1312A, and the rotor 1312 rotates relative to the stator 1311 based on the rotor shaft 1312A; the rotor shaft 1312A extends through the stator 1311 into the deceleration mechanism 132 and is in driving connection with the reducer input end 1322; and the reducer housing 1321 is in driving connection with the stator 1311, and the stator 1311 is in driving connection with the main output end 133 across the rotor 1312.

The working principle of the power module 13 in embodiment 1 of the waist support device is as follows: the reducer housing 1321 and the stator 1311 are in driving connection with each other, and the rotor 1312 is in driving connection with the reducer input end 1322 via the rotor shaft 1312A; when the rotor 1312 rotates relative to the stator 1311, it drives the reducer input end 1322 to rotate, causing the reducer output end 1323 to rotate accordingly such that the power output end 134, which is in driving connection with the reducer output end 1323, rotates relative to the stator 1311; and since the stator 1311, the main output end 133, and the reducer housing 1321 are interconnected, the power output end 134 is actually driven to rotate relative to the main output end 133. That is, the rotation of the rotor 1312 in the motor module 131 drives the power output end 134 to rotate relative to the main output end 133.

A stator shaft 1311A is provided on the side of the stator 1311 close to the deceleration mechanism 132, and the reducer housing 1321 is fixedly connected to the stator 1311 via the stator shaft 1311A; the differential fixing shaft 212 is provided with a fixing shaft hole 212A, and the stator shaft 1311A passes through the fixing shaft hole 212A and mates therewith; and based on the stator shaft 1311A and the fixing shaft hole 212A, the cylindrical differential mechanism 1 forms a rotational connection with the lower end of the waist-back module 2. Therefore, when the power module 13 is in the locked state, the main output end 133 and the power output end 134 are relatively fixed, rendering the entire cylindrical differential mechanism 1 rigid; and the cylindrical differential mechanism 1 can then rotate integrally relative to the back frame 21 based on the stator shaft 1311A and the fixing shaft hole 212A.

With continuing reference to Fig. 5, the waist support device further comprises a sensing and control system 4 configured to sense human motions and control the motor module 131 to rotate or output a torque. The sensing and control system 4 specifically comprises a drive module 41 and a motor encoder 42.

Specifically, the motor encoder 42 comprises a coded magnetic steel 421 and a coded induction circuit 422; the coded induction circuit 422 is mounted on the main output end 133 and positioned near the center of the outer side of the rotor 1312, and the coded magnetic steel 421 is mounted at the shaft end of the rotor shaft 1312A and positioned proximate to the coded induction circuit 422; and the rotation of the rotor 1312 relative to the stator 1311 causes relative rotation of the coded magnetic steel 421 relative to the coded induction circuit 422 and that is sensed by the motor encoder 42. Therefore, the motor encoder 42 senses the rotational angle and/or angular velocity information of the rotor 1312 relative to the stator 1311.

The drive module 41 is mounted on the main output end 133 and is electrically connected to the motor encoder 42 and the motor module 131; and the drive module 41 can control the rotation or torque output of the motor module 131 based on the information sensed by the motor encoder 42.

With reference to Figs. 2 and 5, in order to render embodiment 1 of the waist support device of the present application lighter, thinner, and more body-conforming, the power module 13 has a relatively small volume and limited space; the drive module 41 is arranged parallel to the rotation plane of the motor module 131, is fixed to the main output end 133, and is positioned proximate to the rotor 1312, and the coded induction circuit 422 is mounted on it, thereby enabling the device of the present application to be more compact and lightweight.

With reference to Fig. 5, the waist support device further comprises a battery module 5, and the battery module 5 is mounted on the waist-back module 2-specifically, on the back frame 21-and is electrically connected to the drive module 41.

The battery module 5 includes a power cable 51, and it is electrically connected to the drive module 41 via the power cable 51. Since the power module 13 (including the motor module 131, the deceleration mechanism 132, and the drive module 41 fixed to it) rotates relative to the back frame 21, the battery module 5 is fixed to the back frame 21. To accommodate the relative rotation between the power module 13 and the back frame 21, the power cable 51 needs to continuously bend during the operation of the device in the present application, which will reduce the service life of the power cable 51. To address the above issue, the present embodiment adopts the following configuration. One end of the power cable 51 is connected to the battery module 5 and extends to the vicinity of the frame lower end 211, where it is secured; and the other end of the power cable 51 is spirally wound around the stator shaft 1311A (specifically, wound around the outer side of the stator shaft 1311A), and then secured to the stator 1311, and electrically connected to the drive module 41. The above-described helical winding configuration can improve the service life and reliability of the power cable.

In the present embodiment, the power module 13 is positioned near the user's posterior waist; to achieve a compact, body-conforming design and enhance user experience, the power module 13 (including the deceleration mechanism 132 and the motor module 131) features a relatively small diameter and employs a cylindrical structural layout; and furthermore, the stator shaft 1311A connecting the motor module 131 and the deceleration mechanism 132 has a smaller diameter than those of both the deceleration mechanism 132 and the motor module 131, thereby facilitating the helical winding of the power cable 51 around it.

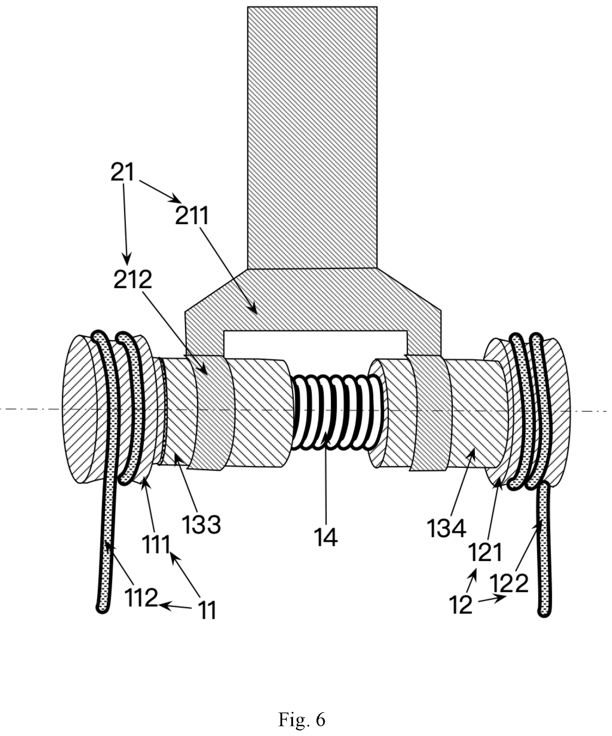

Fig. 6 is a schematic view of a cylindrical differential mechanism in embodiment 2 of a waist support device with a cylindrical differential mechanism according to the present application. Compared with embodiment 1, the power module employs an elastic module 14-for example, specifically, a torsion spring. One end of the elastic module 14 is fixedly connected to the power output end 134, and the other end is fixedly connected to the main output end 133. The elastic module 14 incorporates a pre-tensioning structure, placing the elastic module 14 in a tightened state. As such, the main output end 133 and the power output end 134 exhibit a certain degree of rigidity therebetween and can rotate synchronously to enable differential motion between the A pulling strap 112 and the B pulling strap 122; when the human body simultaneously applies substantial downward force to both the A pulling strap 112 and the B pulling strap 122, the elastic module 14 is further pulled to continue to tighten, causing relative rotation between the main output end 133 and the power output end 134, thereby supporting simultaneous elongation of the A pulling strap 112 and the B pulling strap 122; and concurrently, the torsional moment of the elastic module 14 tensions the A pulling strap 112 and the B pulling strap 122, enabling the back frame 21 to apply a waist extension torque to the human body, thereby assisting waist extension. Compared with the power module of embodiment 1, the elastic module 14 of embodiment 2 is configured to provide low assistive force and a limited assistive angular range.

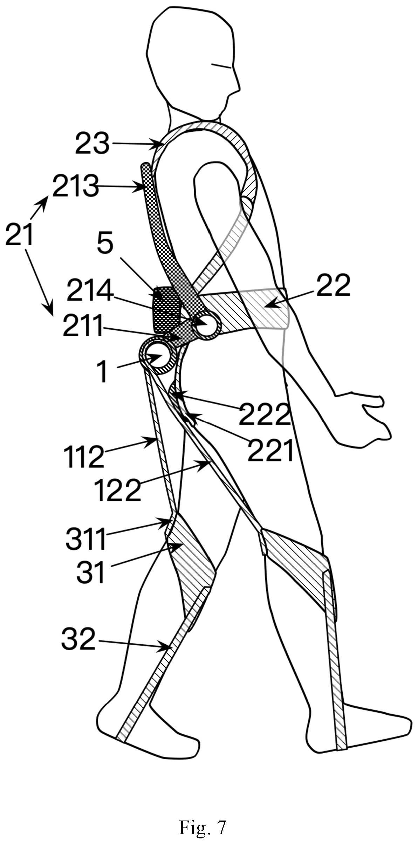

Fig. 7 is a schematic side view of embodiment 3 of a waist support device with a cylindrical differential mechanism according to the present application. Compared with embodiment 1, in this embodiment, the back frame 21 has an overall bent shape, wherein its middle portion bends forward in the sagittal plane and extends to the vicinity of both sides of the human waist; the frame upper end 213 extends downward, and forward in the sagittal plane to the side face of the human waist; the frame lower end 211 extends upward, and forward in the sagittal plane to the side face of the human waist, and is drivingly connected to the frame upper end 213 at the frame waist belt anchoring point 214; the frame waist belt anchoring point 214 is fixedly connected to the waist belt 22; and the battery module 5 is fixed to the waist belt 22. The above solution is adopted by embodiment 3. The back frame 21 uses the frame waist belt anchoring point 214 as a fulcrum; when the A pulling strap 112 and/or the B pulling strap 122 are tightened, the frame upper end 213 is pulled backward to apply tightening force to the human shoulders, thereby assisting in lifting the waist; and the bent shape of the back frame 21 advantageously increases the assisting force arm for the A pulling strap 112 and/or the B pulling strap, thereby enabling greater assistive force at the waist generated by the A pulling strap 112 and/or the B pulling strap, wherein especially during bending at the waist at small angles, it can increase more significant assistance.

In embodiment 3 shown in Fig. 7, the leg module 3 is provided with a foot strap 32, and a lower end of the foot strap 32 is fixed to the human foot and an upper end of it is fixed to the leg strap 31; in embodiment 3, the foot strap 32 is fixed to the leg strap 31 on the anterior side of the human calf; the leg strap 31 encircles the human calf, with its anterior side lower end fixed to the foot strap 32 and a pulling strap anchoring point 311 provided on its posterior side, and the pulling strap anchoring point 311 is fixed to the lower end of the A pulling strap 112 and/or the B pulling strap 122; when the A pulling strap 112 and/or the B pulling strap 122 are tightened, the leg strap 31 is pulled tightly upward, thereby tensioning the foot strap 32; and because the upper end of the foot strap 32 is fixed to the leg strap 31 on the anterior side of the human calf, tensioning of the A pulling strap 112 and/or the B pulling strap 122 generates a knee extension torque that assists the human body in extending the leg.

It will be apparent to those skilled in the art that various modifications and variations can be made in the application without departing from the spirit or scope of the application. In this way, if these modifications and variations of the present application still fall within the scope of the claims and their equivalent technical solutions, then the present application also intends to include these modifications and variations.

The above are specific implementation modes of the present application, and the scope of protection of the present application is not limited to this. Any skilled person familiar with the technical field can easily think of various equivalent modifications or substitutions within the technical scope disclosed in the present application, and these modifications or substitutions should be included in the scope of protection of the present application. Therefore, the scope of protection of the present application should be based on the scope of protection of the claims.

## Claims

1. A waist support device with a cylindrical differential mechanism, **characterized in that** the waist support device comprises a cylindrical differential mechanism, a waist-back module, and a leg module;
the cylindrical differential mechanism is horizontally arranged near a posterior waist of a human body; a main body portion of the cylindrical differential mechanism has a cylindrical structure; a central axis of the cylindrical differential mechanism is horizontally arranged and parallel to a coronal plane of the human body; the cylindrical differential mechanism has an A output end and a B output end at its two ends, respectively; a power module is provided between the A output end and the B output end; the power module comprises a main output end and a power output end; and the main output end is rotatable relative to or lockable with the power output end under driving;
the A output end comprises an A output disc and an A pulling strap; the B output end comprises a B output disc and a B pulling strap; the A pulling strap and the B pulling strap are wound onto the A output disc and the B output disc, respectively, in opposite directions; one end of the A pulling strap and one end of the B pulling strap are fixed to the A output disc and the B output disc, respectively; and the A output disc and the B output disc are in driving connection with the power output end and the main output end, respectively, so that the A output disc and the B output disc are relatively rotatable or lockable under drive;
a lower end of the waist-back module is provided with a differential fixing shaft, a central axis of the differential fixing shaft coincides with the central axis of the cylindrical differential mechanism, and the cylindrical differential mechanism is rotationally connected to the lower end of the waist-back module via the differential fixing shaft; and
the other end of the A pulling strap and the other end of the B pulling strap are fixedly connected to the leg modules of two legs of the human body, respectively.

2. The waist support device according to claim 1, **characterized in that** the waist-back module comprises a back frame, a waist belt and a shoulder strap, wherein the back frame is arranged on a back of the human body, a lower end of the back frame extends to a vicinity of the posterior waist of the human body and is fixed to the waist of the human body via the waist belt, and an upper end of the back frame extends to a vicinity of a back center of the human body and is fixed to a shoulder and the back of the human body via the shoulder strap; and the cylindrical differential mechanism is provided on the lower end of the back frame.

3. The waist support device according to claim 2, **characterized in that** a middle portion of the back frame is bent forward in the sagittal plane and extends to a vicinity of two sides of the waist of the human body, and is fixed to the waist of the human body by means of the waist belt.

4. The waist support device according to claim 2, **characterized in that** a waist pad block is provided between the waist belt and the lower end of the back frame.

5. The waist support device according to claim 2, **characterized in that** the waist belt is provided with a buttock pad, the buttock pad is provided with a sliding pad block, and the A pulling strap and the B pulling strap slide on the sliding pad block.

6. The waist support device according to claim 1, **characterized in that** the leg module comprises a leg strap, each leg strap is fixed to a thigh, a calf, a foot or a knee joint of the human body, the leg strap is provided with pulling strap anchoring points, and the other end of the A pulling strap and the other end of the B pulling strap are fixedly connected to two pulling strap anchoring points, respectively.

7. The leg module according to claim 6, **characterized in that** the leg module further comprises a foot strap secured to the foot of the human body, the leg strap encircles the calf of the human body, and an upper end of the foot strap is secured to the leg strap.

8. The waist support device according to any one of claims 1 to 7, **characterized in that** the power module comprises a motor module and a deceleration mechanism, both having a cylindrical structure; the motor module comprises a stator and a rotor; the deceleration mechanism comprises a reducer housing, a reducer input end, and a reducer output end; the reducer input end is close to the stator; the reducer output end is disposed on a side away from the motor module and is drivingly connected to the reducer input end and the power output end; the rotor is provided with a rotor shaft; the rotor rotates relative to the stator based on the rotor shaft; the rotor shaft passes through the stator and extends into the deceleration mechanism, and is drivingly connected to the reducer input end; the reducer housing is drivingly connected to the stator; and the stator is drivingly connected to the main output end across the rotor.

9. The waist support device according to claim 8, **characterized in that** a stator shaft is provided on a side of the stator close to the deceleration mechanism, and the reducer housing is fixedly connected to the stator via the stator shaft; and the differential fixing shaft is provided with a fixing shaft hole, the stator shaft passes through the fixing shaft hole, and is based on the stator shaft and the fixing shaft hole, and the cylindrical differential mechanism forms a rotational connection with the lower end of the waist-back module.

10. The waist support device according to claim 8, **characterized in that** the waist support device further comprises a sensing and control system; and the sensing and control system comprises a drive module and a motor encoder;
the motor encoder comprises a coded magnetic steel and a coded induction circuit, the coded induction circuit is provided on the main output end and is located close to a center of an outer side of the rotor, and the coded magnetic steel is provided at a shaft end of the rotor shaft and is located close to the coded induction circuit; and
the drive module is arranged on the main output end and is electrically connected to the motor encoder and the motor module; and the drive module can control a rotation or torque output of the motor module according to information sensed by the motor encoder.

11. The waist support device according to claim 10, **characterized in that** the waist support device further comprises a battery module, the battery module being provided on the waist-back module and electrically connected to the drive module; and
the battery module is provided with a power cable, and one end of the power cable is connected to the battery module, while the other end of the power cable is helically wound around the stator shaft, fixed to the stator, and electrically connected to the drive module.

12. The waist support device according to claim 1, **characterized in that** the power module is an elastic module, and one end of the elastic module is fixedly connected to the power output end and the other end is fixedly connected to the main output end; and the elastic module comprises a pre-tensioning structure such that the elastic module is in a torsionally tightened state.
